(19) Europäisches Patentamt
European Patent Office
Office européen des brevets

(11) **EP 1 405 384 B1**

(12) **EUROPÄISCHE PATENTSCHRIFT**

(45) Veröffentlichungstag und Bekanntmachung des Hinweises auf die Patenterteilung:
**19.12.2007 Patentblatt 2007/51**

(21) Anmeldenummer: **02758063.8**

(22) Anmeldetag: **28.06.2002**

(51) Int Cl.:
*H02J 1/00* (2006.01)

(86) Internationale Anmeldenummer:
**PCT/DE2002/002359**

(87) Internationale Veröffentlichungsnummer:
**WO 2003/004315 (16.01.2003 Gazette 2003/03)**

(54) **VORRICHTUNGEN UND/ODER VERFAHREN ZUR BESTIMMUNG DER VERFÜGBARKEIT VON ELEKTRISCHER ENERGIE INSBESONDERE IN BORDNETZEN MIT MEHREREN ENERGIESPEICHERN**

DEVICES AND/OR METHODS FOR DETERMINING THE AVAILABILITY OF ELECTRIC ENERGY, PARTICULARLY IN VEHICLE ELECTRIC SYSTEMS COMPRISING SEVERAL ENERGY ACCUMULATORS

DISPOSITIFS ET/OU PROCEDES POUR DETERMINER LA DISPONIBILITE D'ENERGIE ELECTRIQUE, NOTAMMENT DANS DES RESEAUX DE BORD A PLUSIEURS ACCUMULATEURS D'ENERGIE

(84) Benannte Vertragsstaaten:
**DE ES FR GB IT SE**

(30) Priorität: **29.06.2001 DE 10131268**

(43) Veröffentlichungstag der Anmeldung:
**07.04.2004 Patentblatt 2004/15**

(73) Patentinhaber:
• **ROBERT BOSCH GMBH**
  **70442 Stuttgart (DE)**
• **DaimlerChrysler AG**
  **70327 Stuttgart (DE)**
• **VB Autobatterie GmbH**
  **30419 Hannover (DE)**

(72) Erfinder:
• **KNEIFEL, Markus**
  **71739 Oberriexingen (DE)**
• **BRAEUNINGER, Sigmar**
  **69469 Weinheim (DE)**
• **GROSS, Christof**
  **71384 Weinstadt (DE)**

(56) Entgegenhaltungen:
WO-A-98/40951        WO-A-99/22434
FR-A- 2 769 764       US-A- 5 710 506
US-A- 5 773 962       US-A- 5 973 497
US-A- 6 144 185

EP 1 405 384 B1

**Beschreibung**

Stand der Technik

Die Erfindung betrifft Vorrichtungen bzw. Verfahren zur Bestimmung der Verfügbarkeit von elektrischer Energie insbesondere in Bordnetzen zugrunde gelegt ger mit mehreren, insbesondere zwei Energiespeichern in Kraftfahrzeugen mit den Merkmalen des Anspruchs 1.

Zwei-Batterie-Bordnetzsysteme bzw. Bordnetze mit zwei Energiespeichern sind beispielsweise aus der DE-P 196 45 944 bekannt. Sie dienen üblicherweise zur Optimierung der elektrischen Energieversorgung in Kraftfahrzeugen und haben als Hauptmerkmal einen zweiten Batterie- bzw. Energiespeicherkreis, welcher je nach Betriebszustand eine elektrische Kopplung bzw. Entkopplung vom Hauptbatteriekreis aufweist. Der Hauptbatteriekreis, der auch als Verbraucherbatteriekreis bezeichnet wird, umfasst dabei die herkömmliche Verbraucherbatterie, den Generator und die meisten elektrischen Verbraucher. Die Verbindung zwischen dem ersten Batteriekreis (Hauptbatteriekreis) und dem zweiten Batteriekreis wird über Schaltelemente hergestellt, die beispielsweise von einem Steuergerät, insbesondere dem sogenannten Bordnetzsteuergerät angesteuert werden. Die Schaltelemente können dabei auch Bestandteil des Steuergerätes sein.

Der zweite Batteriekreis dient zur Versorgung von Verbrauchern, die primär nur eine kurze Zeit die elektrische Versorgung benötigen. Solche Kurzzeitverbraucher sind beispielsweise Hochstromverbraucher wie der Starter oder ein elektrisch beheizbarer Katalysator. Durch Entnahme der elektrischen Energie für diese Verbraucher aus dem zweiten Batteriekreis wird die Batterie bzw. der Hauptbatteriekreis nicht zusätzlich belastet.

Es besteht außerdem noch die Möglichkeit, die elektrische Energie der zweiten Batterie für eine kurze Zeitdauer von einigen Sekunden bis zu mehreren Minuten zur unterstützenden Versorgung des ersten Batteriekreises zu nutzen. Die erforderlichen Umschaltvorgänge werden bei Bedarf vom Bordnetzsteuergerät durchgeführt, das die erforderlichen Umschaltsignale abgibt.

Mit dem bekannten Zwei-Batterie-Bordnetzsystem ist eine Auslegung derart möglich, dass die zweite Batterie nur durch einen sehr kleinen Ruhestrom belastet wird, wobei dieser Ruhestrom durch Leckströme durch Verbraucher und von Schaltelementen bzw. vom Steuergerät zur Entkopplung vom ersten Batteriekreis bzw. durch Selbstentladung der Batterie während der entkoppelten Betriebsart im Fahrzeug- Betriebs- bzw. Stillstandzeitraum verursacht wird. Diese Belastung ist typischerweise um den Faktor 10 bis 50 kleiner als die Belastung der Batterie im Verbraucherbatteriekreis.

Bei solchen bekannten Zwei-Batterie-Bordnetzsystemen ist es üblich, die beiden Batterien hinsichtlich ihrer anwendungsspezifischen Eigenschaften zu optimieren. Die Batterie des zweiten Batteriekreises ist an die zu erwartenden Erfordernisse angepaßt und kann kurzzeitig einen hohen Strom liefern. Beispielsweise wird die Batterie im zweiten Kreis auf Hochstromfähigkeit optimiert, da sie vorwiegend zur Versorgung des Starters verwendet wird und dieser einen hohen Strom benötigt. Anstelle einer Batterie kann als zweiter Energiespeicher auch ein Kondensator, beispielsweise ein Supercap oder ein ähnliches Energiespeicherelement eingesetzt werden.

Die Batterie des ersten Batteriekreises, also des Verbraucherbatteriekreises, die als Versorgurigsbatterie für die üblichen Bordnetzverbraucher dient, wird üblicherweise beispielsweise auf Zyklenfestigkeit optimiert.

Zur Optimierung des Ladezustandes der beiden Batterien, insbesonders auch zur Optimierung des Ladezustandes der Batterie im zweiten Batteriekreis und somit zur Erhöhung der Verfügbarkeit elektrischer Energie im gesamten Bordnetzsystem wird auch bei der aus der DE-P 196 45 944 bekannten Lösung ein Steuergerät eingesetzt. Dieses Steuergerät kann auch einen integrierten DC/DC-Wandler zur Spannungsanpassung aufweisen. Der DC/DC-Wandler sorgt dabei für die optimale Nachladung der zweiten Batterie mit einer in Abhängigkeit von der Batterietemperatur angepassten Ladespannung. Die zweite Batterie weist demnach im Normalfall einen hohen Ladezustand (State of charge (SOC) >90%...95%) auf. Eine solche Systemauslegung ergibt deutliche Vorteile auf der Fahrzeugebene. Beispielsweise ist die Startsicherheit und damit die Fahrzeugverfügbarkeit gewährleistet. Eine hohe elektrische Verfügbarkeit von Bordnetz bzw. von (Hochstrom) Verbrauchern wird ebenfalls sichergestellt.

Bei den, beispielsweise aus der DE-OS 196 459 44 bekannten Zwei-Batterie-Bordnetzsystemen werden derzeit übliche Gleichspannungswandler (DC/DC-Wandler) eingesetzt. Dabei ergeben sich folgende Probleme: Die Ladecharakteristik der eingesetzten Gleichspannungswandler (DC/DC-Wandler) ist bedingt durch die begrenzte Wandlerleistung von typischerweise 100 bis 500 Watt in zwei Bereiche unterteilt:

1. Konstantstrom- oder Konstantleistungsregelung: Bei Erreichen der maximalen Wandlerleistung erfolgt unter Tolerierung einer Sollspannungsabweichung eine Begrenzung des Ladestroms oder der Ladeleistung. Dieser Zustand tritt auf, wenn die zweite Batterie einen tiefen Ladezustand aufweist, beispielsweise nach sehr langer Standzeit des Fahrzeugs oder wenn ein Defekt im zweiten Batteriekreis vorliegt, beispielsweise ein Batteriedefekt, ein Nebenschluss der Verkabelung oder ein Nebenschluss der Verbraucher. Bei einem funktionstüchtigen Batteriekreis tritt in Abhängigkeit von der Temperatur der zweiten Batterie und dem Wert des konstanten Ladestroms spätestens nach einer definierten Zeitdauer keine Sollspannungsabweichung mehr auf. Eine Überschreitung der definierten Zeitdauer, beispielsweise das Erreichen eines zeitlichen Schwellwertes bei der Konstantstromregelung, ist ein Hinweis für eine Fehlfunktion auf Systemebene und wird erfindungsgemäß als neue sensorische Zustandsgröße verwendet.

2. Spannungsregelung: Die Regelung der Ladespannung erfolgt auf einen vorgegebenen Sollwert ohne Sollspannungsabweichung, wobei sich der Ladestrom in einem funktionsfähigen Batteriekreis im Wertebereich von 0 bis zum maximalen Ladestrom des Gleichspannungswandlers frei einstellt. Diese Regelung wird als Spannungsregelung bezeichnet.

Die beiden vorstehend beschriebenen Regelungen sind prinzipiell in Verbindung mit dem Betrieb von derzeit eingesetzten Gleichspannungswandlern (DC/DC-Wandlern) bekannt.

Als Batterien werden heute in Kraftfahrzeugen üblicherweise Blei-Säure-Batterien eingesetzt. Diese Batterien haben eine direkte Korrelation zwischen Ruhespannungsniveau und Ladezustand. Der Ladezustand wird dabei üblicherweise aus der Ruhespannung ermittelt, wobei ein linearer Bereich von etwa 11,7 Volt bis 12,9 Volt zwischen entladener und geladener Batterie angesetzt werden kann. Bei Zwei-Batterie- bzw. Zwei-Energiespeicher-Bordnetzsystemen ist eine Unterschreitung von definierten unteren Spannungsschwellwerten für den zweiten Batteriekreis (Betriebsart: Batterie im Ruhezustand) ein eindeutiges Kennzeichen für eine Fehlfunktion auf Systemebene. Wird eine Abweichung vom Normalfall erkannt, d.h. wird eine Abweichung vom hohen Ladezustand der zweiten Batterie erkannt, deutet dies auf eine Fehlfunktion hin.

Die Betriebsarten des zweiten Batteriekreises bzw. des zweiten Energiespeicherkreises, bzw. für die zweite Batterie können entsprechend der vorstehenden Ausführungen in vier Bereiche unterteilt werden:

a. Batterie ist im Ruhezustand, entkoppelt vom Hauptbatteriekreis, während einer Zeitdauer Ta, d.h. sie wird nur belastet durch einen sehr kleinen Ruhestrom während des Betriebes des Kraftfahrzeuges. In diesem Fall läuft der Motor und damit auch der Generator und dieser liefert die für die Versorgung der Verbraucher im Hauptbatteriekreis benötigte elektrische Leistung.

b. Batterie ist im Ruhezustand, während einer Zeitdauer Tb, d.h. sie wird nur belastet durch einen sehr kleinen Ruhestrom während der Stillstandszeit des Kraftfahrzeuges sowie während der Vorstartphase des Motors. In diesem Zustand laufen Motor und Generator nicht.

c. Zeitbergrenztes Laden der Batterie im zweiten Batteriekreis, während einer Zeitdauer Tc, dies geschieht im allgemeinen mit dem Ziel, den hohen Ladezustand der zweiten Batterie mittels eines der zweiten Batterie vorgeschalteten Gleichspannungswandlers stets aufrecht zu erhalten.

d. Elektrische Versorgung von Verbrauchern, während einer Zeitdauer Td, insbesondere von Hochstromverbrauchern bzw. unterstützende Versorgung des ersten Batteriekreises.

Für die zeitliche Verteilung der Betriebsarten über die Gesamtlebensdauer des Fahrzeugs kann folgender Zusammenhang angenommen werden:

$$Ta+Tb \gg Tc > Td.$$

Bei bekannten Systemen wird die Verfügbarkeit von gespeicherter Energie in Batterien mittels komplizierter State Of Health-/State Of Charge- (SOH-/SOC)- Algorithmen sowie mittels einer aufwendigen Strom-, Spannungs- und Temperatursensorik bestimmt. Dies lässt sich mit der einer Genauigkeit von etwa +- 5% bis 10% realisieren. Nachteilig bei dem bekannten Verfahren ist neben dem sensorischen Aufwand und der erforderlichen Platzierung dieser Sensorik in unmittelbarer Nähe zur Batterie eine im allgemeinen zusätzlich notwendige Überwachung des Energieflusspfades zwischen der Batterie und dem Verbraucher-Teilsystem, welches eine erhöhte Verfügbarkeit von elektrischer Energie erfordert.

Aus der WO 99/22434 ist eine Vorrichtung und ein Verfahren zur Bestimmung der Verfügbarkeit von elektrischer Energie in einem Bordnetz mit wenigstens zwei Teilsysteme bildenden Energiespeichern, beispielsweise Batteriekreisen, die über einen Spannungswandler miteinander in Verbindung stehen. Eine Steuereinrichtung beeinflusst den Spannungswandler und umfasst Rechenmittel, die ladespezifische Größen auswerten. Diese Größen sind beispielsweise Spannungen der Energiespeicher, die mit Spannungsschwellwerten, die ein Maß für den Ladezustand der Energiespeicher darstellen, verglichen werden. Abhängig vom Vergleichsergebnis wird die Beeinflussung des Spannungswandlers durchgeführt bzw. es wird der geeignete Energiespeicher zur Versorgung kritischer Verbraucher herangezogen.

Aus der WO 98/40951 ist eine Batteriezustandserkennung für eine Batterie bekannt, die mit sehr aufwändigen Rechenverfahren den Batteriezustand ermittelt. Über ein Display kann der ermittelte Batteriezustand angezeigt werden.

Die FR 2 769 764 beschreibt ein spezielles Ladeverfahren für eine Batterie, bei dem laufend die Batteriespannung und der Ladestrom gemessen wird. Abhängig von diesen Größen wird dann eine optimale Ladung nach zwei unterschiedlichen Verfahren durchgeführt, mit konstanter Spannung oder konstantem Strom.

Vorteile der Erfindung

Die erfindungsgemäßen Vorrichtungen und/oder Verfahren zur Bestimmung der Verfügbarkeit von elektrischer Energie insbesondere in wenigstens zwei Energiespeicher bzw. wenigstens zwei Batterien umfassenden Bordnetzsystemen mit den Merkmalen der unabhängigen Ansprüche 1 für die Vorrichtung und 8 für das Verfahren haben den Vorteil, dass eine sehr zuverlässige Bestimmung und Signalisierung bzw. Anzeige der noch zur Verfügung stehenden elektrischen Energie möglich ist. Dies wird in vorteilhafter Weise auf der Grundlage von Verfahren auf Systemebene erzielt. Besonders vorteilhaft ist dabei, dass mittels einer definierten Anordnung unter Nutzung von vorhandenen System-Zustandsgrößen, vornehmlich von Spannungswerten in den Batteriekreisen sowie mittels Nutzung der Ladecharakteristik des Gleichspannungswandlers sowie unter Nutzung von State of Charge of Systems-/ State of Health of Systems (SOCS-/SOHS)-Algorithmen Auswertungen durchgeführt werden, die Aussagen zur Verfügbarkeit von elektrischer Energie im zweiten Batteriekreis erlauben. Dabei wird das Erreichen vorgebbarer Schwellwertereignisse ausgewertet. Es wird so eine deterministische Überwachung des zweiten Batteriekreises auf vordefinierte Schwellwertergebnisse auf Systemebene durchgeführt. Weiterhin werden in vorteilhafter Weise vordefinierte Schwellwertereignisse für den ersten Batteriekreis, also den Verbraucherbatteriekreis, durch das Eintreten bestimmter Systemzustände signalisiert, welche als kausalen Folgezustand eine unterstützende elektrische Versorgung für den Verbraucherbatteriekreis durch Kopplung mit dem zweiten Batteriekreis erfordern, wobei die Ansteuersignale, die die Umschaltung bewirken, vom Bordnetzsteuergerät bzw. einer dafür zuständigen Elektronik abgegeben werden.

Vorteilhaft gegenüber dem Stand der Technik ist weiterhin, dass für Zwei-Batterie-Bordnetzsysteme bzw. Bordnetzsysteme mit mehreren, insbesondere zwei Energiespeichern durch den Einsatz der erfindungsgemäßen Vorrichtungen bzw. Anordnungen sowie durch Verwendung der SOCS-/SOHS-Algorithmen definierte Aussagen zur Verfügbarkeit elektrischer Energie gemacht werden können. Der Einsatz und die Verbreitung von beispielsweise mechatronischen Fahrzeugsystemen, die eine hohe Verfügbarkeit von elektrischer Energie sowie eine Signalisierung von Abweichungen vom Sollzustand voraussetzen, ist durch den Einsatz der erfindungsgemäßen Verfahren bzw. Vorrichtungen erst möglich. Beispiele für solche mechatronischen Fahrzeugsysteme sind: elektrohydraulischen Bremsen bzw. Lenk- und Bremssysteme mit elektrischen oder elektrisch-mechanischen Komponenten, Systeme zur elektromechanischen Lenkunterstützung bzw. Komfort-Schaltgetriebe, elektrische Funktionen/Systeme im Antriebsstrang, elektrisch beheizten Katalysatoren (E-Kat). Weiterhin kann eine direkte Information über den Zustand des Bordnetzes, insbesondere über die Verfügbarkeit elektrischer Energie in der zweiten Batterie laufend abgegeben und anderen Fahrzeugsystemen sowie dem Fahrer angezeigt werden.

Weitere Vorteile der Erfindung werden durch die in den Unteransprüchen angegebenen Maßnahmen erzielt. In vorteilhafter Weise wird bzw. werden dabei:

- Die Batterie im zweiten Batteriekreis bedingt durch den Gleichspannungswandler im Normalfall stets einen hohen Ladezustand aufweisen. Dies wird durch eine Ladestrategie unterstützt, die eine bevorzugte Ladung der zweiten Batterie gewährleistet.

- Die Nutzung der in Folge der im Gleichspannungswandler ohnehin vorhandenen Spannungssensorik für die SOCS-/ SOHS-Algorithmen ohne weiteren Aufwand möglich. Es ist dabei keine zusätzliche Stromsensorik erforderlich.

- Die Erweiterung des vorhandenen Funktionsablaufs durch Schwellwert-Indikatoren bzw. Grenzwerte sowie die Nutzung der vorhandenen Ladestrategie mit einem Minimalaufwand ermöglicht.

- Die SOCS-/SOHS-Schwellwertereignisse als vordefinierte Folge von Abweichungen vom Normalfall auf Systemebene definiert, wodurch eine kombinierte Überwachung von Energiequelle und Energieflusspfad auf Systemebene im zweiten Batteriekreis ermöglicht wird.

- Die Nutzung der typischen Ladecharakteristik unter Berücksichtigung einer maximalen und von der Batterietemperatur abhängigen Zeitdauer von Konstantstromregelung zur SOHS-Überwachung von Batteriesystemen eingesetzt.

- Die Wahl der Schwellwerte derart erfolgen, dass im allgemeinen eine prädiktive Signalisierung von einem Systemzustand mit deutlich reduzierter Verfügbarkeit von elektrischer Energie möglich ist, dies bewirkt eine kombinierte und verkettete Nutzung von vorhandenen Systemfunktionen sowie von Schwellwert-Indikatoren.

- Die Berücksichtigung von allen Fahrzeug-Betriebsarten erhalten, dies ermöglicht eine vorteilhafte Regelung. Die Signalisierung erfolgt bei aktiviertem Steuergerät im allgemeinen nach Abschluss der Initialisierung des Steuergerätes, beispielsweise mittels einer CAN-Schnittstelle.

- Die einfache Implementierbarkeit der SOCS-/SOHS-Algorithmen in Funktionsablaufsteuerungen von Zwei-Batterie-Bordnetzsystemen ermöglicht.

Zeichnung

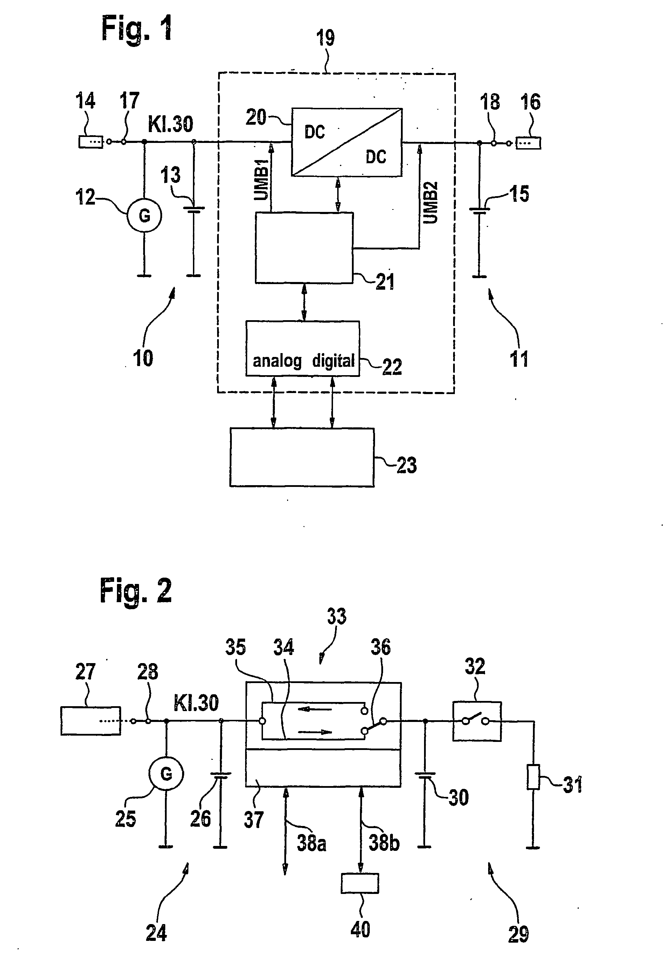

Ausführungsbeispiele der Erfindung sind in dem Figuren 1 und 2 der Zeichnung dargestellt und werden in der nachfolgenden Beschreibung näher erläutert.

Beschreibung

In Figur 1 ist eine Anordnung zur Bestimmung der Verfügbarkeit elektrischer Energie in einem Zwei-Batterie-Bordnetzsystem dargestellt, das einen ersten Batteriekreis 10, der den Verbraucherbatteriekreis darstellt, sowie einen zweiten Batteriekreis 11 für die Hochstromverbraucher umfasst. Vom ersten Batteriekreis 10 ist der Generator 12 dargestellt sowie eine Batterie 13, beispielsweise eine Batterie mit 12 Volt Nennspannung. Der Generator 12 sowie die Batterie 13 sind in üblicher Weise über die Klemme K1.30 miteinander verbunden. An die Klemme K1.30 sind auch die üblichen elektrischen Verbraucher 14 angeschlossen.

Vom zweiten Batteriekreis 11 ist lediglich die Batterie 15 sowie ein Hochstromverbraucher 16 dargestellt, ein solcher Hochstromverbraucher ist beispielsweise der Starter, ein elektrisch beheizbarer Katalysator usw. Mit 16a ist eine unterstützende Versorgung symbolisiert, über die bei gegebenen Umständen elektrische Leistung von der Batterie 15 zum Verbraucherbatteriekreis gelangt. Die Verbraucher 14 und 16 können über Schalter 17 und 18 bei Bedarf an die jeweilige Batterie angeschlossen werden. Die Ansteuerung dieser Schalter übernimmt beispielsweise ein Steuergerät, beispielsweise ein Bordnetzsteuergerät 19.

Zwischen dem ersten Batteriekreis 10 und dem zweiten Batteriekreis 11 liegt ein Gleichspannungswandler 20, der beispielsweise nach den Bedingungen Strom I = const bzw. Spannung U = Usoll arbeitet. Die Ansteuerung des DC/DC-Spannungswandlers 20 wird vom Bordnetzsteuergerät 19 bzw. von einem Mikroprozessor 21 des Bordnetzsteuergerät 19 durchgeführt, der auch die SOCS/SOHS-Algorithmen auswertet. Die genaue Vorgehensweise wird noch erläutert.

Der Mikroprozessor 21 gibt dem Spannungswandler 20 die Messgrößen UMB1 bzw. UMB2 vor, die der gemessenen Spannung an der Batterie 13 bzw. der Batterie 15 entsprechen. Über eine Schnittstelle 22 ist der Mikroprozessor 21 mit einer Signalisierungseinheit 23 verbunden. Die Signalisierungseinheit 23 zeigt die SOCS/SOHS-Information an. Die Verbindung zwischen der Schnittstelle 22 und der Signalisierungsstufe 23 erfolgt entweder analog oder digital, beispielsweise über einen CAN-Bus. Sowohl der Spannungswandler 20 als auch der Mikroprozessor 21 und die Schnittstelle 22 sind beim Ausführungsbeispiel Bestandteil des Steuergerätes 19. Der DC/DC-Wandler kann aber auch getrennt vom Bordnetzsteuergerät eingebaut werden.

In Figur 2 ist ein weiteres Zwei-Batterie-Bordnetzsystem mit Gleichspannungswandler (DC/DC-Wandler) dargestellt. Dieses Zwei-Batterie-Bordnetzsystem umfasst wiederum einen ersten Batteriekreis 24 der den Verbraucherkreis darstellt und wenigstens einen Generator 25, eine Batterie 26, beispielsweise eine 12 V Batterie sowie elektrische Verbraucher 27 umfasst, die über ein Schaltmittel 28 über Klemme K1.30 mit dem Generator 25 bzw. der Batterie 26 verbunden werden können.

Der zweite Batteriekreis 29 umfasst wenigstens eine Batterie 30, beispielsweise eine 12 V Batterie, die einen hohen Ladezustand aufweisen soll, sowie Hochstromverbraucher 31, beispielsweise E-Kat oder Starter. Gegebenenfalls kann der Hochstromverbraucher 31 auch ein Starter/Generator sein. Die Hochstromverbraucher 31 können über einen Leistungsschalter 32, der als Halbleiterschalter oder Relais ausgestaltet ist, mit der Batterie 30 verbunden werden. Die Ansteuerung des Leistungsschalters sowie des Schalters 28 übernimmt das Steuergerät 33, das zwischen dem ersten Batteriekreis 24 und dem zweiten Batteriekreis 29 angeordnet ist.

Das Steuergerät 33 umfasst beim Ausführungsbeispiel nach Figur 2 einen DC/DC-Wandler 34 sowie eine Leitung 35, die zur unterstützenden Versorgung über einen Schalter 36 mit der Batterie 30 bzw. dem Leistungsschalter 32 verbindbar ist. Je nach Stellung des Schalters 36 wird die Verbindung zwischen den beiden Batteriekreisen über die unterstützende Versorgung 35 oder den DC/DC-Wandler 34 hergestellt. Die Richtung des sich einstellenden Stromes ist durch Pfeile angegeben.

Die Steuerelektronik 37, die Bestandteil des Steuergerätes 33 ist und wenigstens einen Mikrocomputer, eine CAN-Schnittstelle sowie Mittel zur Auswertung einer Spannungssensorik umfasst, übernimmt die erforderlichen Berechnungen bzw. Signalisierungen SOCS/SOHS und Ansteuerungen. Über eine analoge Schnittstelle 38a oder eine digitale Schnittstelle 38b, z.B eine CAN-Schnittstelle werden SOCS/SOHS-Informationen abgegeben bzw. ausgetauscht oder es wird der Funktionsablauf beispielsweise mittels eines weiteren Steuergerätes 40 beeinflusst. Das Steuergerät 40 kann beispielsweise das Motorsteuergerät sein.

Die Erfindung kann entsprechend angepasst auch generell für Mehrbatteriebordnetze bzw. für Bordnetze mit mehreren Ladungs- bzw. Energiespeichern eingesetzt werden. Als Ladungsspeicher kommen Batterien, Kondensatoren, Supercaps usw. in Frage.

Für die nun folgende detaillierte Beschreibung der in den beiden Ausführungsbeispielen dargestellten Zwei-Batterie-Bordnetzsysteme werden folgende Definitionen bzw. Abkürzungen benötigt:

EHB: Elektro-Hydraulische-Bremse

E-KAT: Elektrisch (beheizbares) Katalysatorsystem

KSG: Komfort-Schaltgetriebe

SOC: Ladezustand einer Batterie (State Of Charge)

SOH: Alterungszustand/Ausfall einer Batterie (State Of Health).

SOCS (State Of Charge of Systems): Schwellwertaussage zur Verfügbarkeit elektrischer Energie in (Teil-) Systemen mit Batterie. Die SOCS-Schwellwerte werden auf den Ladezustand der Batterie 15, 30 im zweiten Batteriekreis 11, 29 abgeglichen. Der typische Ladezustand für die Signalisierung von SOCS-Schwellwerten ist SOC=60%...75%. Mit den eingesetzten Algorithmen lässt sich eine Genauigkeit in der Größenordnung von 5 bis 10% erreichen.

SOHS (State Of Health of Systems): Schwellwertaussage zu irreversiblen Systemfehlern, welche eine permanente Reduzierung der Verfügbarkeit elektrischer Energie bis hin zum später möglichen Ausfall der elektrischen Energieversorgung in (Teil-) Systemen mit Batterie zur Folge haben. Es wird eine Unterteilung in Fehler im ersten (SOHS1) sowie zweiten (SOHS2) Batteriekreis durchgeführt. Fehlerzustände entsprechend SOHS1 sind im allgemeinen durch den Bedarf einer häufigen unterstützenden Versorgung für den ersten Batteriekreis 10, 24 durch die Batterie 15, 30 im zweiten Batteriekreis 11, 29 gekennzeichnet. Fehlerzustände entsprechend SOHS2 kennzeichnen eine Reduzierung der Verfügbarkeit elektrischer Energie bis hin zum später möglichen Ausfall der elektrischen Energieversorgung im zweiten Batteriekreis 11, 29.

Die Zuordnung der SOCS-/SOHS-Algorithmen erfolgt entsprechend den bereits erläuterten Betriebsarten a bis d. In den einzelnen Betriebsarten werden also folgende Algorithmen berücksichtigt:

a) Unterschreitet nach erfolgreich abgeschlossenem Ladevorgang, d.h. es wird ein hoher Ladezustand der Batterie 15, 30 im zweiten Batteriekreis 11, 29 bei entkoppelter Betriebsweise erwartet, während des Betriebs des Kraftfahrzeugs bei laufendem Motor und Generator die Spannung im zweiten Batteriekreis 11, 29 einen definierten Spannungs-Schwellwert, so erfolgt eine SOCS- und eine SOHS2-Signalisierung. Bei hinreichender Verfügbarkeit von elektrischer Energie im ersten Batteriekreis 10, 24 wird im allgemeinen anschließend durch erneutes Laden der Batterie im zweiten Batteriekreis 11, 29 ("Erhaltungsladung") ein Versuch zur Kompensation dieses Systemzustandes unternommen.

Erfolgt mittels spezieller Algorithmen eine Fremdstarterkennung, so erfolgt bei erkanntem Fremdstart und laufendem Motor eine SOCS-Signalisierung, da eine undefinierte Ladungsentnahme/Ladungszuführung im zweiten Batteriekreis 11, 29 stattgefunden hat. Der Zustand "Motor läuft" wird hierbei als Kriterium für eine verfügbare Mindest-Energiemenge im zweiten Batteriekreis 11, 29 gewertet.

b) wird bei der Initialisierung des Steuergeräts 19, 33, beispielsweise nach langer Stillstandszeit des Kraftfahrzeuges in der Vorstartphase des Motors ein definierter Spannungsschwellwert im zweiten Batteriekreis 11, 29 unterschritten, so erfolgt eine SOCS-Signalisierung. Durch Zählung und Auswertung von Fehlstartvorgängen mit entsprechend definierter Energieentnahme aus der Batterie 15, 30 im zweiten Batteriekreis 11, 29 erfolgt ebenfalls eine SOCS-Signalisierung, d.h. hierbei ist die Anzahl der erfolglosen Startversuche größer als ein vorgebbarer Schwellwert.

c) bei Konstantstromregelung im DC/DC-Wandler 20, 34 erfolgt bei Überschreitung einer vorgebbaren definierten Zeitdauer, bzw. eines zeitlichen Schwellwertes eine SOCS- und eine SOHS2-Signalisierung. Anstatt einer Konstantstromregelung kann entsprechend angepasst eine Konstantleistungsregelung durchgeführt werden.

d) Bei einer unterstützenden Versorgung des ersten Batteriekreises 10, 24 durch die zweite Batterie 15, 30 erfolgt in der Vorstartphase des Motors sowie bei laufendem Motor eine SOCS-Signalisierung.

Bei Überschreiten einer bestimmten Häufigkeit der unterstützenden Versorgung, die entweder durch einen Absolutwert oder bezogen auf eine bestimmte Zeitdauer festgelegt wird, erfolgt eine SOHS1-Signalisierung. Hierbei ist ein häufiges Auftreten der unterstützenden Versorgung ein eindeutiges Kennzeichen für eine Fehlfunktion im ersten Batteriekreis 10, 24 beispielsweise bei gealterter oder defekter Batterie 13, 26 oder unterbrochenen Verbindung zur Batterie oder bei fehlerhaft geringer Leistungsabgabe des Generators 12, 25 sowie bei Nebenschlüssen von Verbrauchern oder in der Verkabelung.

Während der kurzzeitigen Versorgung von Hochstromverbrauchern 16, 31 erfolgt keine Überwachung des zweiten Batteriekreises 11, 29.

Die SOCS-Signalisierung erfolgt temporär, d.h. sie wird nach Wiedererreichen eines hohen Ladezustands der zweiten Batterie 15, 30, üblicherweise ab dem Übergang von Konstantstromregelung auf Spannungsregelung beim Gleichspannungswandlerbetrieb oder bei Beendigung eines sogenannten Klemme K1.15-Zyklus zurückgesetzt, d.h. nach Beendigung eines vorgebbaren Ladezyklus.

Die SOHS Signalisierung, die sowohl die SOHS1- als auch die SOHS2-Signalisierung betrifft, erfolgt nach dem ersten Auftreten permanent d.h. auch über einen Klemme 15 Zyklus hinaus, bis ein vorsätzliches Rücksetzen beispielsweise im Rahmen einer Behebung der auslösenden Fehlerursache in einer Werkstatt erfolgt.

**Patentansprüche**

1. Vorrichtung zur Bestimmung der Verfügbarkeit von elektrischer Energie in einem Bordnetz mit wenigsten zwei Teilsysteme bildenden Energiespeicherkreisen, insbesondere Batteriekreisen, die über einen Spannungswandler miteinander in Verbindung stehen und mit einer Steuereinrichtung, die den Spannungswandler beeinflusst und Rechenmittel umfasst, die ladespezifische Algorithmen auswerten, **dadurch gekennzeichnet, dass** die ladespezifischen Algorithmen wenigstens eine Schwellwertaussage (SOCS) zur Verfügbarkeit elektrischer Energie in wenigstens einem Teilsystem und/oder Schwellwertaussagen (SOHS) zu irreversiblen Systemfehlern in wenigstens einem Teilsystem umfassen, wobei die Zuordnung der SOCS-/SOHS-Algorithmen abhängig von vorliegenden Betriebsarten erfolgt.

2. Vorrichtung zur Bestimmung der Verfügbarkeit von elektrischer Energie in einem Bordnetz, nach Anspruch 1, **dadurch gekennzeichnet, dass** Mittel zur Signalisierung bzw. Anzeige der Verfügbarkeit der elektrischen Energie und/oder einer Fehlfunktion vorhanden sind.

3. Vorrichtung nach Anspruch 1 oder 2, **dadurch gekennzeichnet, dass** die Schwellwertaussagen zu Fehlfunktionen in wenigstens einem Teilsystem (SOHS) unterteilt sind in Schwellwertaussagen (SOHS1) zu Fehlfunktionen im ersten Batteriekreis (10, 24) und Schwellwertaussagen (SOHS2) zu Fehlfunktionen im zweiten Batteriekreis (11, 29)

4. Vorrichtung nach Anspruch 1, 2 oder 3, **dadurch gekennzeichnet, dass** der Spannungswandler (20, 34) ein DC/DC-Wandler ist, der Bestandteil der Steuereinrichtung (19, 35) ist und von dieser so angesteuert wird, dass vorgebbare Kriterien erfüllt werden.

5. Vorrichtung nach einem der vorhergehenden Ansprüche, **dadurch gekennzeichnet, dass** die Steuereinrichtung (19, 35) eine zusätzliche Verbindung umfaßt, über die bei abgeschaltetem Spannungswandler (34) eine Verbindung zwischen den beiden Batteriekreisen herstellbar ist.

6. Vorrichtung nach einem der vorhergehenden Ansprüche, **dadurch gekennzeichnet, dass** die Batterie (13, 26) des ersten Batteriekreises (10, 24) auf Zyklenfestigkeit und die Batterie (15, 30) des zweiten Batteriekreises (11, 29) auf Hochstromfähigkeit und/oder minimaale Selbstentladung optimiert ist.

7. Vorrichtung nach einem der vorhergehenden Ansprüche, **dadurch gekennzeichnet, dass** die Steuereinrichtung wenigstens Rechen- und Speichermittel, Zählmittel, analoge und/oder digitale Schnittstellen, Mittel zur Fremdstarterkennung und eine Spannungssensorik umfaßt.

8. Verfahren zur Bestimmung der Verfügbarkeit von elektrischer Energie in einem Bordnetz mit zwei Teilsysteme bildenden Energiespeicherkreisen, insbesondere Batteriekreisen, insbesondere mit einer Vorrichtung nach einem der vorhergehenden Ansprüche, **dadurch gekennzeichnet, dass** ladespezifische Algorithmen mit wenigstens einer Schwellwertaussage zur Verfügbarkeit elektrischer Energie in wenigstens einem Teilsystem (SOCS) und Algorithmen mit Schwellwertaussagen zu irreversiblen Systemfehlern in wenigstens einem Teilsystem (SOHS, SOHS1, SOHS2) ausgewertet werden, wobei die Zuordnung der SOCS-/SOHS-Algorithmen abhängig von vorliegenden Betriebsarten erfolgt.

9. Verfahren nach Anspruch 8, **dadurch gekennzeichnet, dass** unterschiedliche Betriebsarten für die Batteriekreise (10, 11, 24, 29) definiert werden und dass die Zuordnung der Algorithmen abhängig von der erkannten Betriebsart erfolgt.

10. Verfahren nach Anspruch 8 oder 9, **dadurch gekennzeichnet, dass** Betriebsarten für den ersten Batteriekreis gewählt werden und diese Betriebsarten wie folgt definiert werden:

   a) Konstantstrom- oder Konstantleistungsregelung im Spannungswandler
   b) Spannungsregelung im Spannungswandler.

11. Verfahren nach Anspruch 8 oder 9, **dadurch gekennzeichnet, dass** die Betriebsarten für den zweiten Energiespeicher bzw. Batteriekreis gewählt werden und diese Betriebsarten wie folgt definiert werden:

   a) Batterie im Ruhezustand während des Betriebes des Kraftfahrzeuges bei laufendem Motor und Generator
   b) Batterie im Ruhezustand während der Stillstandszeit des Kraftfahrzeuges sowie in der Vorstartphase bei stehendem Motor und stehendem Generator
   c) Laden der Batterie im zweiten Batteriekreis mittels des Gleichspannungswandlers mit dem Ziel, den hohen Ladezustand aufrecht zu erhalten
   d) Elektrische Versorgung von Verbrauchern insbesonders Hochstromverbrauchern aus der zweiten Batterie und/oder unterstützende Versorgung des ersten Batteriekreises

12. Verfahren nach Anspruch 11, **dadurch gekennzeichnet, dass** in der Betriebsart a) nach erfolgreich abgeschlossenem Ladevorgang eine (SOCS)- und eine (SOHS2)-Erkennung und Signalisierung erfolgt, wenn die Spannung im zweiten Batteriekreis einen definierten Spannungs-Schwellwert unterschreitet.

13. Verfahren nach Anspruch 11 oder 12, **dadurch gekennzeichnet, dass** in der Betriebsart a) nach erfolgreich abgeschlossenem Ladevorgang zusätzlich eine Fremdstarterkennung durchgeführt wird, über Abarbeitung spezieller Algorithmen und eine (SOCS)-Erkennung und Signalisierung erfolgt wenn ein Fremdstart erkannt ist, wobei der Zustand "Motor läuft" als Kriterium für eine verfügbare Mindest-Energiemenge im zweiten Batteriekreis (11, 29) gewertet wird.

14. Verfahren nach Anspruch 11 oder 12, **dadurch gekennzeichnet, dass** in der Betriebsart b) bei der Initialisierung des Steuergeräts (19, 33) geprüft wird, ob nach langer Stillstandszeit des Kraftfahrzeuges in der Vorstartphase des Motors ein definierter Spannungsschwellwert im zweiten Batteriekreis (11, 29) unterschritten wird und zutreffenderweise eine SOCS-Signalisierung erfolgt.

15. Verfahren nach Anspruch 14, **dadurch gekennzeichnet, dass** zur SOCS-Signalisierung eine Zählung und Auswertung von Fehlstartvorgängen mit entsprechend definierter Energieentnahme aus der Batterie (15, 30) im zweiten Batteriekreis (11, 29) durchgeführt wird und die SOCS-Signalisierung erfolgt, wenn die Anzahl der erfolglosen Startversuche größer als ein vorgebbarer Schwellwert ist.

16. Verfahren nach einem der vorhergehenden Ansprüche, **dadurch gekennzeichnet, dass** im Betriebszustand c) bei Konstantstrom- oder Konstantleistungsregelung im DC/DC-Wandler (20, 34) eine SOCS- und eine SOHS2-Signalisierung erfolgt wenn eine Überschreitung einer vorgebbaren definierten Zeitdauer, bzw. eines zeitlichen Schwellwertes erkannt wird.

17. Verfahren nach einem der vorhergehenden Ansprüche, **dadurch gekennzeichnet, dass** im Betriebszustand d) eine SOCS-Signalisierung erfolgt, wenn eine unterstützende Versorgung des ersten Batteriekreises (10, 24) durch die zweite Batterie (15, 30) in der Vorstartphase des Motors sowie bei laufendem Motor erkannt wird.

18. Verfahren nach Anspruch 17, **dadurch gekennzeichnet, dass** eine SOHS1-Signalisierung erfolgt, wenn ein Überschreiten einer bestimmten Häufigkeit der unterstützenden Versorgung, die entweder durch einen Absolutwert definiert ist oder bezogen auf eine bestimmte Zeitdauer ist, erkannt wird.

**19.** Verfahren nach einem der vorhergehenden Ansprüche, **dadurch gekennzeichnet, dass** die SOCS-Signalisierung temporär erfolgt und nach Wiedererreichen eines hohen Ladezustands der zweiten Batterie (15, 30), insbesondere ab dem Übergang von Konstantstrom- bzw. Konstantleistungsregelung auf Spannungsregelung beim Betrieb des Gleichspannungswandlers oder bei Beendigung eines Klemme Kl.15-Zyklus zurückgesetzt wird.

**20.** Verfahren nach einem der vorhergehenden Ansprüche, **dadurch gekennzeichnet, dass** sowohl die SOHS1- als auch die SOHS2-Signalisierung nach dem ersten Auftreten permanent erfolgt, auch über einen Klemme K1.15 Zyklus hinaus, bis ein vorsätzliches Rücksetzen, insbesonders im Rahmen einer Behebung der auslösenden Fehlerursache in einer Werkstatt erfolgt.


**Claims**

**1.** Apparatus for determining the availability of electrical energy in a vehicle energy supply system having at least two energy storage circuits which form subsystems, in particular battery circuits, which are connected to one another via a voltage converter and having a control device which influences the voltage converter and has computation means which evaluate charge-specific algorithms, **characterized in that** the charge-specific algorithms comprise at least one threshold value statement (SOCS) relating to the availability of electrical energy in at least one subsystem and/or threshold value statements (SOHS) relating to irreversible system faults in at least one subsystem, with the association between the SOCS and SOHS algorithms being dependent on the operating modes being used.

**2.** Apparatus for determining the availability of electrical energy in a vehicle energy supply system according to Claim 1, **characterized in that** means are provided for signalling and indication of the availability of the electrical energy and/or of a malfunction.

**3.** Apparatus according to Claim 1 or 2, **characterized in that** the threshold value statements relating to malfunctions are subdivided in at least one subsystem (SOHS) into threshold value statements (SOHS1) relating to malfunctions in the first battery circuit (10, 24) and threshold value statements (SOHS2) relating to malfunctions in the second battery circuit (11, 29).

**4.** Apparatus according to Claim 1, 2 or 3,
**characterized in that** the voltage converter (20, 34) is a DC/DC converter, which is a component of the control device (19, 35) and is driven by it such that predeterminable criteria are satisfied.

**5.** Apparatus according to one of the preceding claims, **characterized in that** the control device (19, 35) has an additional connection via which a connection can be made between the two battery circuits when the voltage converter (34) is switched off.

**6.** Apparatus according to one of the preceding claims, **characterized in that** the battery (13, 26) in the first battery circuit (10, 24) is optimized for cycle strength, and the battery (15, 30) in the second battery circuit (11, 29) is optimized for high-current capability and/or minimum cell discharge.

**7.** Apparatus according to one of the preceding claims, **characterized in that** the control device has at least computation and storage means, counting means, analogue and/or digital interfaces, means for external start identification and a voltage sensor system.

**8.** Method for determining the availability of electrical energy in a vehicle energy supply system having two energy storage circuits which form subsystems, in particular battery circuits, in particular having an apparatus according to one of the preceding claims, **characterized in that** the charge-specific algorithms are evaluated with at least one threshold value statement relating to the availability of electrical energy in at least one subsystem (SOCS) and algorithms are evaluated with threshold value statements relating to irreversible system faults in at least one subsystem (SOHS, SOHS1, SOHS2), with the association between the SOCS and SOHS algorithms being dependent on the operating modes being used.

**9.** Method according to Claim 8, **characterized in that** different operating modes are defined for the battery circuits (10, 11, 24, 29), and **in that** the association between the algorithms is dependent on the identified operating mode.

**10.** Method according to Claim 8 or 9, **characterized in that** operating modes are selected for the first battery circuit, and these operating modes are defined as follows:

   a) constant-current or constant-power regulation in the voltage converter
   b) voltage regulation in the voltage converter.

11. Method according to Claim 8 or 9, **characterized in that** the operating modes are selected for the second energy store and battery circuit, and these operating modes are defined as follows:

   a) battery in the rest state during operation of the motor vehicle with the engine and generator running
   b) battery in the rest state while the motor vehicle is switched off, and in the prestarting phase when the engine and the generator are stationary
   c) charging of the battery in the second battery circuit by means of the DC/DC voltage converter with the aim of maintaining the high state of charge
   d) electrical supply of loads, in particular of high-current loads, from the second battery and/or supported supply of the first battery circuit.

12. Method according to Claim 11, **characterized in that**, in operating mode a) once the charging process has been successfully completed, (SOCS) and (SOHS2) identification and signalling take place if the voltage in the second battery circuit is below a defined voltage threshold value.

13. Method according to Claim 11 or 12, **characterized in that**, in operating mode a) after the charging process has been successfully completed, an external start identification is additionally carried out, by processing specific algorithms and (SOCS) identification and signalling takes place when an external start is identified, with the "engine running" state being assessed as a criterion for a minimum amount of energy being available in the second battery circuit (11, 29).

14. Method according to Claim 11 or 12, **characterized in that**, in operating mode b), a check is carried out during initialization of the controller (19, 33) to determine whether, after the motor vehicle has been shut down for a long time, a defined voltage threshold value is undershot in the second battery circuit (11, 29) during the prestarting phase of the engine, and SOCS signalling relating to them is produced.

15. Method according to Claim 14, **characterized in that**, for SOCS signalling, failed starting processes with a correspondingly defined amount of energy being drawn from the battery (15, 30) are counted and evaluated in the second battery circuit (11, 29), and SOCS signalling takes place if the number of unsuccessful start attempts is greater than a predeterminable threshold value.

16. Method according to one of the preceding claims, **characterized in that**, in operating mode c), with constant-current or constant-power regulation in the DC/DC converter (20, 34) SOCS and SOHS2 signalling take place when it is found that a predeterminable defined time duration and/or a time threshold value have/has been exceeded.

17. Method according to one of the preceding claims, **characterized in that**, in operating mode d), SOCS signalling takes place when a supporting supply of the first battery circuit (10, 24) is identified by the second battery (15, 30) in the prestarting phase of the engine and when the engine is running.

18. Method according to Claim 17, **characterized in that** SOHS1 signalling takes place when it is found that a specific frequency of the supporting supply, which is either defined by an absolute value or is related to a specific time duration, has been exceeded.

19. Method according to one of the preceding claims, **characterized in that** the SOCS signalling takes place temporarily and after the second battery (15, 30) has reached a high state of charge again, in particular being reset from the transition from constant-current or constant-power regulation to voltage regulation during operation of the DC/DC voltage converter or on completion of a terminal K1.15 cycle.

20. Method according to one of the preceding claims, **characterized in that** both SOHS1 and SOHS2 signalling take place permanently after the first occurrence, also following a terminal K1.15 cycle, until precautionary resetting takes place, in particular in the course of rectification of the initiating fault cause in a workshop.

**Revendications**

1. Dispositif pour déterminer la disponibilité de l'énergie électrique dans un réseau embarqué ayant au moins deux systèmes partiels formant des circuits d'alimentation en énergie, notamment des circuits de batteries reliés par un convertisseur de tension et une installation de commande qui influence le convertisseur de tension et comporte des moyens de calcul exploitant des algorithmes spécifiques à la charge,
**caractérisé en ce que**
les algorithmes spécifiques à la charge donnent au moins une information de valeur de seuil (SOCS) pour la disponibilité de l'énergie électrique dans au moins un système partiel et/ou des informations de valeurs de seuil (SOHS) pour des défauts irréversibles du système dans au moins un système partiel, et
l'association des algorithmes SOCS/SOHS dépend des modes de fonctionnement actuels.

2. Dispositif pour déterminer la disponibilité de l'énergie électrique dans un réseau embarqué selon la revendication 1,
**caractérisé par**
des moyens pour signaler et/ou afficher la disponibilité de l'énergie électrique et/ ou un défaut de fonctionnement.

3. Dispositif selon les revendications 1 ou 2,
**caractérisé en ce que**
les informations de valeurs de seuil pour les défauts de fonctionnement dans au moins un système partiel (SOHS) sont divisées en informations de valeurs de seuil (SOHS1) des défauts de fonctionnement dans un premier circuit de batterie (10, 24) et en informations de valeurs de seuil (SOHS2) pour les défauts de fonctionnement dans un second circuit de batterie (11, 29).

4. Dispositif selon les revendications 1, 2 ou 3,
**caractérisé en ce que**
le convertisseur de tension (20, 34) est un convertisseur continu/continu faisant partie de l'installation de commande (19, 35) et commandé par celle-ci pour remplir des critères prédéfinis.

5. Dispositif selon l'une des revendications précédentes,
**caractérisé en ce que**
l'installation de commande (19, 35) comprend une liaison supplémentaire réalisant une liaison entre les deux circuits de batterie lorsque le convertisseur de tension (34) est coupé.

6. Dispositif selon l'une des revendications précédentes,
**caractérisé en ce que**
la batterie (13, 26) du premier circuit de batterie (10, 24) est optimisée pour une tenue de cycle et la batterie (15, 30) du second circuit de batterie (11, 29) est optimisée pour une capacité d'intensité forte et/ou d'auto-charge minimale.

7. Dispositif selon l'une des revendications précédentes,
**caractérisé en ce que**
l'installation de commande comporte au moins des moyens de calcul et de mémoire, des moyens de comptage, des interfaces analogiques et/ou numériques, des moyens de détection de démarrage extérieurs et des capteurs de tension.

8. Procédé pour déterminer la disponibilité de l'énergie électrique dans un réseau embarqué à circuit d'alimentation en énergie formant deux systèmes partiels, notamment des circuits de batterie, comportant notamment un dispositif selon l'une des revendications précédentes,
**caractérisé en ce que**
les algorithmes spécifiques de charge sont exploités avec au moins une information de valeur de seuil pour la disponibilité de l'énergie électrique dans au moins un système partiel (SOCS) et les algorithmes avec des informations de valeurs de seuil pour des défauts irréversibles de systèmes dans au moins un système partiel (SOHS, SOHS1, SOHS2), et l'association des algorithmes SOCS/SOHS se fait selon les modes de fonctionnement actuels.

9. Procédé selon la revendication 8,
**caractérisé en ce qu'**
on définit des modes de fonctionnement différents pour les circuits de batterie (10, 11, 24, 29) et l'association des algorithmes se fait en fonction du mode de fonctionnement reconnu.

**10.** Procédé selon les revendications 8 ou 9,
**caractérisé en ce qu'**
on sélectionne des modes de fonctionnement pour le premier circuit de batterie et on définit ces modes de fonctionnement comme suit :

a) régulation d'intensité constante ou de puissance constante dans le convertisseur de tension,
b) régulation de tension dans le convertisseur de tension.

**11.** Procédé selon les revendications 8 ou 9,
**caractérisé en ce qu'**
on choisit les modes de fonctionnement du second accumulateur d'énergie ou du circuit de batterie et on définit ces modes de fonctionnement comme suit :

a) batterie au repos pendant le fonctionnement du véhicule lorsque le moteur et le générateur fonctionnent,
b) batterie au repos pendant l'arrêt du véhicule et dans la phase de pré-démarrage, lorsque le moteur et le générateur sont arrêtés,
c) chargement de la batterie du second circuit de batterie à l'aide du convertisseur de tension continue dans le but de maintenir un état de charge élevé,
d) alimentation électrique des utilisateurs, notamment des utilisateurs à courant fort à partir de la seconde batterie et/ou alimentation assistée du premier circuit de batterie.

**12.** Procédé selon la revendication 11,
**caractérisé en ce que**
dans le mode de fonctionnement a), une fois l'opération de charge terminée avec succès, on effectue une détection (SOCS) et une détection (SOHS2) et si la tension d'un second circuit de batterie passe en dessous d'un seuil de tension défini ont émet un signal.

**13.** Procédé selon la revendication 11 ou 12,
**caractérisé en ce que**
dans le mode de fonctionnement a), une fois que l'opération de charge a réussi et est terminée, on effectue en outre une détection de démarrage extérieur, par un traitement d'algorithmes spéciaux et une détection (SOCS) et une émission de signal si l'on détecte un démarrage extérieur, l'état « moteur fonctionne » étant exploité comme critère de la quantité d'énergie minimale disponible dans le second circuit de batterie (11, 29).

**14.** Procédé selon la revendication 11 ou 12,
**caractérisé en ce que**
dans le mode de fonctionnement b), lors de l'initialisation de l'appareil de commande (19, 33) on vérifie si après un temps d'arrêt prolongé du véhicule, dans la phase de pré-démarrage du moteur, on passe en dessous d'un seuil de tension défini dans le second circuit de batterie (11, 29) et de manière correspondante, on émet un signal (SOCS).

**15.** Procédé selon la revendication 14,
**caractérisé en ce que**
pour l'émission du signal (SOCS), on compte et on exploite les opérations de démarrage non réussies avec prise d'énergie correspondante, définie, dans la batterie (15, 30) du second circuit de batterie (11, 29) et on émet, le signal (SOCS) si le nombre des tentatives de démarrage échouées, dépasse un seuil prédéfini.

**16.** Procédé selon l'une des revendications précédentes,
**caractérisé en ce que**
dans le mode de fonctionnement c), pour une régulation d'intensité constante ou de puissance constante dans le convertisseur DC/DC (20, 34) on effectue une émission de signal SOCS et SOHS2 si l'on reconnaît le dépassement d'une durée définie au préalable ou d'un seuil de temps.

**17.** Procédé selon l'une des revendications précédentes,
**caractérisé en ce que**
dans le mode de fonctionnement d), on émet un signal SOCS si on détecte une alimentation d'assistance du premier circuit de batterie (10, 24) par le second circuit de batterie (15, 30) en phase de pré-démarrage du moteur et pendant le fonctionnement du moteur.

**18.** Procédé selon la revendication 17,
**caractérisé en ce qu'**
on émet un signal (SOHS1) si l'on a reconnu un dépassement d'une fréquence définie d'alimentation d'assistance qui est, soit définie par une valeur absolue, soit rapportée à une certaine durée.

**19.** Procédé selon l'une des revendications précédentes,
**caractérisé en ce qu'**
on émet de manière temporaire un signal SOCS et on le neutralise de nouveau après avoir atteint un état de charge élevé pour la seconde batterie (15, 30), notamment à partir du passage de la régulation d'intensité constante ou de puissance constante on passe à la régulation de tension pendant le fonctionnement du convertisseur de tension continue ou à la fin d'un cycle de la borne KI 15.

**20.** Procédé selon l'une des revendications précédentes,
**caractérisé en ce que**
l'émission de signal SOHS 1 et SOHS2 se fait de manière permanente après la première arrivée, également par un cycle de borne KI 15 jusqu'à une neutralisation prévisible notamment dans le cadre d'élimination d'une cause d'erreur de déclenchement, faite en atelier.

# Fig. 1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19645944 P
- DE 19645944 A
- WO 9922434 A
- WO 9840951 A
- FR 2769764